# EUROPÄISCHE PATENTSCHRIFT

(11) **EP 1 567 778 B1**
(45) Veröffentlichungstag und Bekanntmachung des Hinweises auf die Patenterteilung: **28.06.2006**
(21) Anmeldenummer: 03767659.0
(22) Anmeldetag: 26.11.2003
(51) Int. Cl.: F16C 29/02

(54) **ZAHNSTANGEN-ELEKTROLENKUNG**
RACK AND PINION ELECTRO-STEERING
DIRECTION ELECTRIQUE A CREMAILLERE

(30) Priorität: 03.12.2002 DE 10256314
(43) Veröffentlichungstag der Anmeldung: 31.08.2005
(73) Patentinhaber: ZF Lenksysteme GmbH, 73527 Schwäbisch Gmünd (DE)
(72) Erfinder: BEUTLER, Olaf, 73560 Böbingen (DE); KARCH, Christian, 73527 Täferrot (DE); SCHULER, Robert, 73655 Plüderhausen (DE)
(86) Internationale Anmeldenummer: PCT/EP2003/013265
(87) Internationale Veröffentlichungsnummer: WO 2004/051103

(56) Entgegenhaltungen:
- EP-A- 0 192 531
- DE-A- 2 634 054
- DE-A- 3 408 673
- DE-A- 10 049 570

## Beschreibung

Die Erfindung betrifft eine Zahnstangen-Elektrolenkung, insbesondere für Kraftfahrzeuge mit einer in einem Gehäuse verlaufenden Zahnstange die mit einer Druckstück/Ritzel-Paarung in Wirkverbindung steht.,

Bei Zahnstangen-Elektrolenkungen arbeitet anstelle eines hydraulischen Systems ein elektrisches System. Es besteht aus einem Elektromotor, einem Getriebe zur Kraftübertragung sowie der Steuerungselektronik und - sensorik. Das Lenkmoment, das der Fahrer ausübt; wird von der Sensorik der Servolenkung ausgewertet und in ein elektrisches Signal umgewandelt, das Elektromotor und Getriebe in ein entsprechendes Servomoment umsetzen und auf die Lenkung übertragen.. Bekannte Zahnstangen-Elektrolenkungen sind Lenksäulenantriebe, Ritzelantriebe, Doppelritzelantriebe sowie achsparallele Antriebe.

Bei den bekannten Zahnstangen-Elektrolenkungen wird die Zahnstange durch ein oder zwei Druckstücke gegen eine entsprechende Anzahl von Ritzel gedrückt, so dass eine gute Verzahnung zwischen dem Ritzel und der Zahnstange entsteht. Im allgemeinen weisen die Zahnstangen-Elektrolenkungen zwei Ritzel bzw. Ritzelverzahnungen auf, wobei ein Ritzel mit der Servoseite, d.h. mit dem Elektromotor in Verbindung steht und das andere Ritzel mit der Sensorseite bzw; der Lenksäule verbunden ist. Die Druckstücke führen dabei die Zahnstange und drücken sie gegen die Ritzelverzahnung.

Von Nachteil ist es, dass es bei der Zahnstangen-Elektrolenkung zu störenden Geräuschen kommen kann. Eine Geräuschquelle ist dabei die Zahnstange und eine weitere Geräuschquelle sind die Druckstücke. Die Geräuschentwicklung' ist bei Zahnstangen Elektrolenkungen die zwei Druckstück/Ritzel-Paarungen aufweisen, aufgrund der Freiheitsgrade an Zahnstange und Druckstücken besonders hoch. Jedoch kommt die störende Geräuschentwicklung auch bei Zahnstangen-Elektrolerikizngen , vor, die lediglich eine Druckstück/Ritzel-Paar'ung aufweisen.. Eine Ursache der Geräuschentwicklung ist darin zu finden, dass aufgrund der unterschiedlichen Verzahnungskräfte auf Sensor- und Servoseite ein Verkippen.der Zahnstange verursacht wird, wodurch insbesondere bei schnellem Wechsellenken ein Klopfen der Lenkung auftritt.

Das Verkippen der Zahnstange führt in nachteilhafter Weise auch zu einem hohen Verschleiß der Ritzelverzahnung.

Unabhängig bzw. zusätzlich zu der Geräuschentwicklung durch die Zahnstange entstehen unerwünschte Geräusche auch dadurch, dass die Druckstücke, die in einem Gehäuseteil eingebettet sind, zum Kippen neigen.

Die bekannten Druckstücke sind aus Aluminium oder allgemein aus Metall gefertigt und weisen an ihrer konkaven Anlagefläche zu der Zahnstange eine Gleitfolie auf. Zwischen dem Druckstück und dem umgebenden Gehäuseteil ist im allgemeinen ein O-Ring angeordnet, der das Eindringen von Staub verhindern soll.

Als Stand der Technik sind hier die DE 100 49 570 A1 und folgenden Schriften zu nennen: DE 199 29 932 C2, DE 33 32 483 C2, DE 694 12 701 T2, DE 28 07 005 Al und DE 34 08 673 C2.

In der DE 100 94 570 A1, die dem oberbegriff des Anspruchs 1 entspricht, wird eine elektrische Servolenkvorrichtung offenbart, bei der eine Zahnstange mit zwei Stangenverzahnungen zum Übertragen eines Lenkdrehmoments auf die Zahnstange sowie einen zweiten Zahnstangen- und Ritzelmechanismus zum Übertragen eines Hilfsdrehmoments auf die Zahnstange vorgesehen ist. Dies hat jedoch den Nachteil, dass die Zahnstange aufwändig in der Fertigung ist.

Der vorliegenden Erfindung liegt die Aufgabe zugrunde, eine Zahnstangen-Elektrolenkung zu schaffen, die die vorstehend genannten Nachteile löst, insbesondere in einfacher und kostengünstiger Weise das Auftreten von störenden Geräuschen unterbindet und den Verschleiß der Ritzelverzahnungen minimiert.

Erfindungsgemäß wird diese Aufgabe durch den kennzeichnenden Teil von Anspruch 1 gelöst.

Dadurch, dass zwischen der Zahnstange und dem Gehäuse ein Lager zur Führung der Zahnstange vorgesehen ist, müssen die Druckstücke nur noch die Verzahnungskräfte aufnehmen. Störende Geräusche durch ein Verkippen der Zahnstange werden dadurch unterbunden. Somit wird selbst bei schnellem Wechsellenken ein Klopfen der Lenkung vermieden.

Durch das Lager zwischen der Zahnstange und dem Gehäuse wird in besonders vorteilhafter Weise auch der Verschleiß der Ritzelverzahnung minimiert. Bei den aus dem Stand der Technik bekannten Lösungen hat das Verkippen der Zahnstange zu einem hohen Verschleiß geführt, der nunmehr; da ein Verkippen der Zahnstange durch das Lager verhindert wird, minimiert wird.

Der Einsatz eines Lagers zwischen der Zahnstange und dem die Zahnstange umgebenden Gehäuse eignet sich in besonders vorteilhafter Weise für Elektro-Zahnstangenlenkungen mit zwei Ritzeln, die unter dem Druck von jeweils einem zugeordneten Druckstück in die Zahnstange eingreifen. Dabei steht ein Ritzel mit der Servoseite des Elektromotors und ein Ritzel mit der Sensorseite bzw. Lenksäule in Wirkverbindung. Unabhängig davon, dass die erfindungsgemäße Lösung hierfür besonders geeignet ist, wird auch bei Zahnstangen-Elektrolenkungen mit nur einer Druckstück/Ritzel-Paarung, wie z.B. beim. Lenksäulenantrieb oder beim Ritzelantrieb eine Reduzierung des Verschleißes an der Ritzelverzahnung aufgrund der optimalen Führung der Zahnstange erreicht.

Erfindungsgemäß ist das Lager als Gleitlager ausgebildet. Denn in Versuchen hat sich herausgestellt, dass sich eine Ausbildung des Lagers zwischen der Zahnstange und dem Gehäuse als Gleitlager besonders gut für eine zuverlässige, dauerhafte und kostengünstige Führung der Zahnstange in dem Gehäuse eignet.

Außerdem ist zum Aufbringen der Gleitlager auf die Zahnstange eine Schlossgeometrie vorgesehen mittels derer die Gleitlager nach Aufbringen auf die Zahnstange geschlossen werden können. Die Schlossgeometrie kann beispielsweise der bei Dichtungsringen in Automatikgetrieben üblichen Schlossgeometrie nachempfunden sein.

Vorteilhafte Ausgestaltungen der Erfindung ergeben sich aus den Unteransprüchen:

Demnach kann ferner vorgesehen sein, dass zwei Gleitlager zur Führung der Zahnstange in dem Gehäuse vorgesehen sind.

Eine Führung der Zahnstange in dem Gehäuse mittels zweier Gleitlager ermöglicht, wie sich in Versuchen ebenfalls herausgestellt hat, eine besonders geeignete Führung, die ein Verkippen der Zahnstange und somit das Auftreten von Geräuschen bzw. einen hohen Verschleiß der Ritzelverzahnung ausschließt.

In einer Weiterbildung der Erfindung kann ferner vorgesehen sein, dass das Druckstück im wesentlichen aus Kunststoff, vorzugsweise aus einem gleitmodifizierten Hochleistungskunststoff hergestellt ist.

Dadurch, dass das Druckstück im wesentlichen aus Kunststoff hergestellt ist, werden Geräusche zwischen dem Druckstück und dem das Druckstück umgebenden Gehäuseteil minimiert. Vorteilhaft ist es dabei, wenn das Druckstück aus einem gleitmodifizierten Hochleistungskunststoff wie Torlon 4301 spritzgußtechnisch gefertigt ist; der dieselbe thermische Längenausdehnung bewirkt, wie das verwendete Gehäusematerial.

Bewegungen des Druckstücks verlaufen im allgemeinen radial zur Zahnstange und resultieren aus Schlägen oder ähnlichen'Einwirkungen auf die Zahnstange, die an das Druckstück entsprechend weitergegeben werden. Aufgrund der Ausgestaltung aus Kunststoff bzw. in vorteilhafter Weise aus einem gleitmodifizierten Kunststoff kann sich das Druckstück zu dem Gehäuseteil ohne störende Geräusche zu verursachen leicht bewegen. Eine Ausbildung des Druckstückes aus Kunststoff bzw. einem Hochleistungskunststoff ermöglicht außerdem, dass der bisher bei den Druckstücken aus Metall bzw. Aluminium notwendige O-Ring, der ein Eindringen von Staub, Schmutz und dergleichen verhindern soll, entfallen kann. Durch den möglichen Entfall des O-Rings wird eine weitere Geräuschquelle eliminiert. Bisher bekannte Druckstücke haben, aufgrund der minimalen Anlagefläche des O-Rings am Gehäuse und dessen leichten Verformbarkeit, zum Kippen um den O-Ring geneigt. Indem der O-Ring nunmehr entfällt und das Druckstück stattdessen aus Kunststoff ausgebildet ist, wird ein Kippen und die damit verbundenen Geräusche verhindert. .

Darüber hinaus kann die bisher notwendige Gleitfolie, die das Druckstück an seiner auf die Zahnstange gerichteten, konkav ausgebildeten Seite aufweist, entfallen. Somit vereinfacht sich zum einen das Handling beim Einbau des Druckstücks, da nur noch ein einziges Teil eingebaut werden muss. Zum anderen ist die Herstellung eines Druckstückes aus Kunststoff, verglichen mit den bisherigen Druckstücken aus Metall bzw. Aluminium in einfacher und kostengünstiger Weise möglich.

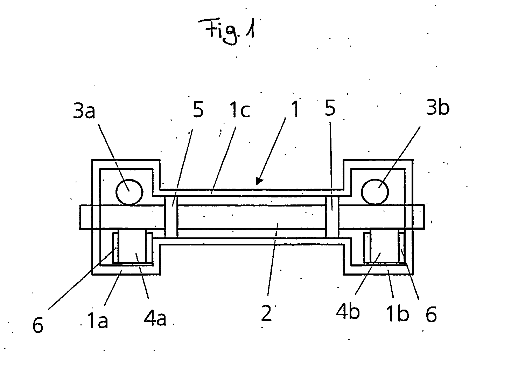

Vorteilhafte Ausgestaltungen und Weiterbildungen der Erfindung ergeben sich auch aus den weiteren Unteransprüchen sowie aus dem nachfolgend anhand der Zeichnung dargestellten Ausführungsbeispiel.

Die einzige Figur der Zeichnung zeigt eine Zahnstangen-Elektrolenkung mit einem Gehäuse, einer in dem Gehäuse verlaufenden Zahnstange sowie zwei Druckstück/Ritzel-Paarungen, die mit' der Zahnstange in Wirkverbindung stehen, wobei die Zahnstange mittels zweier Gleitlager in dem Gehäuse geführt ist.

Zähnstangen-Elektrolenkungen sind aus dem allgemeinen Stand der Technik hinreichend bekannt und dienen im allgemeinen als Ersatz für ein hydraulisches System Zahnstangen-Elektrolenkringen kommen im wesentlichen als Ritzelantrieb, als Doppelritzelantrieb oder als achsparalleler Antrieb vor. Je nach Variante greifen dabei ein oder zwei Ritzel in die Zahnstange ein.

Da Zahnstangen-Elektrolenkungen aus dem allgemeinen Stand der Technik' bereits hinreichend bekannt sind, wird nachfolgend lediglich auf die für die Erfindung wesentlichen Merkmale näher eingegangen.

Die erfindungsgemäße Zahnstangen-Elektrolenkung eignet sich besonders für Kraftfahrzeuge, ist hierauf jedoch nicht beschränkt.

Das Ausführungsbeispiel zeigt einen Ausschnitt einer Zahnstangen-Elektrolenkung mit einem Gehäuse 1 in dem eine Zahnstange 2 verläuft. Die Zahnstange 2 steht dabei mit zwei Ritzeln 3a, 3b, denen jeweils ein Druckstück 4a, 4b zugeordnet ist in Wirkverbindung. Das Ritzel 3a ist im Ausführungsbeispiel in nicht dargestellter Weise mit einer Servoseite bzw. einem Elektromotor verbunden, während das Ritzel 3b mit der Sensorseite bzw. einer ebenfalls nicht dargestellten Lenksäule verbunden ist.

Zwischen der Zahnstange 2 und dem die Zahnstange 2 umgebenden zylinderförmigen Teil 1c des Gehäuses 1 sind zwei als Gleitlager 5 ausgebildete Lager angeordnet. Die Gleitlager 5 dienen dabei zur Führung der Zahnstange 2 in dem Gehäuse 1, wodurch diese Aufgabe nicht mehr von den Druckstücken 4a, 4b übernommen werden muss. Die Druckstücke 4a, 4b müssen somit nur noch die Verzahnungskräfte aufnehmen. Von Vorteil ist es, wenn das Gehäuse 1, insbesondere der zylinderförmige Gehäuseteil 1c durchgehend gehont ist.

In dem Ausführungsbeispiel ist vorgesehen, dass als Material zur Fertigung der Gleitlager 5 ein Kunststoff, vorzugsweise ein für hohe Temperaturen geeigneter Hochleistüngskunststoff verwendet wird. Hierfür eignen sich in besonders bevorzugter Weise Hochleistungskunststoffe wie Solvay Torlon 4301 oder DuPont Vespel SP211. Eine spritzgusstechnische Herstellung der Gleitlager 5 hat sich als besonders geeignet herausgestellt. Zum Aufbringen der Gleitlager 5 auf die Zahnstange 2 ist im Ausführungsbeispiel eine nicht dargestellte Schlossgeometrie vorgesehen mittels derer die Gleitlager 5 nach Aufbringen auf die Zahnstange 2 geschlossen werden können. Die Schlossgeometrie kann beispielsweise der bei Dichtungsringen in Automatikgetrieben üblichen Schlossgeometrie nachempfunden sein.

In dem Ausführungsbeispiel ist vorgesehen, dass die Gleitlager 5 jeweils möglichst nahe im Bereich des Ritzel 3a bzw. 3b angeordnet sind, da somit auftretende Geräusche in besonders vorteilhafter Weise zusätzlich gedämpft werden können. Darüber hinaus weisen die Gleitlager 5 somit einen besonders großen Abstand zueinander auf, wodurch eine besonders vorteilhafte Führung der Zahnstange 2 entsteht. Wenn die Möglichkeit besteht, können alternativ zu der Anordnung der Gleitlager 5 auf der Zahnstange 2 die Gleitlager 5 auch in den zylinderförmigen Teil 1c des Gehäuses 1 eingebracht sein.

Im Ausführungsbeispiel ist vorgesehen, dass die Gleitlager 5 in einem verzahnungsfreien Bereich der Zahnstange 2 angeordnet sind, so dass ein Kontakt mit den Ritzeln 3a, 3b ausgeschlossen ist.

Um eine Geräuschentwicklung im Bereich der Druckstücke 4a, 4b zu unterdrücken, ist in dem Ausführungsbeispiel vorgesehen, dass zwischen dem Druckstück 4a, 4b und dem die Druckstücke 4a, 4b umgebenden Gehäuseteil 1a, 1b ein Gleitlager bzw. eine Gleitbuchse 6 eingesetzt ist, die den Kontaktbereich zwischen dem jeweiligen Druckstück 4a, 4b und den umgebenden Gehäuseteil 1a, 1b umfasst. Somit wird eine Geräuschentwicklung durch die Bewegung der Druckstücke 4a, 4b in Relation zu den' Gehäuseteilen 1a, 1b reduziert bzw. vollständig ausgeschaltet.

Bei den bisher zum Stand der Technik bekannten Lösungen hat das aus Nletall bzw. Aluminium gefertigte Druckstück. 4a, 4b an den jeweiligen Gehäuseteilen 1a, 1b geschliffen, wodurch einerseits Geräusche entstanden sind und zum anderen ein entsprechender Verschleiß die Folge war. Vorgesehen war bislang lediglich der Einsatz eines O-Ringes zwischen, dem jeweiligen Druckstück 4a, 4b und dem Gehäuseteil 1a, 1b durch das Staub und dergleichen abgehalten werden sollte. Dabei haben die Erfinder festgestellt, dass die aus dem Stand der Technik bekannten Druckstücke um den O-Ring kippen und diesen verformen, wodurch die bereits erwähnten Geräusche bzw. Verschleißerscheinungen entstehen. Durch den Einsatz einer Gleitbuchse 6 bzw. eines Gleitlagers werden diese Geräusche wirkungsvoll verhindert. Wie sich aus dem Ausführungsbeispiel ergibt, erstreckt sich die dem jeweiligen Druckstück 4a bzw. 4b zugeordnete Gleitbuchse 6 über die ganze Breite des Druckstückes 4a bzw. 4b.

Die Gleitbuchse 6 bewirkt in vorteilhafter Weise eine Schallentkopplung der Bauteile sowie eine.Reibungsminimierung.

In dem Ausführungsbeispiel ist vorgesehen, dass die Gleitbuchse 6 im wesentlichen aus einem Kunststoff, vorzugsweise einem Hochleistungskunststoff hergestellt ist. Dabei kann der gleiche Hochleistungskunststoff eingesetzt werden, wie bei den bereits erwähnten Gleitlagern 5. Auch hierfür eignet sich in besonders vorteilhafter Weise eine spritzgusstechnische Herstellung.

In dem dargestellten Ausführungsbeispiel ist vorgesehen, dass die Gleitbuchsen 6 in das Gehäuseteil 1a, 1b eingesetzt sind.

Alternativ zu den Gleitlagern 5 bzw. den Gleitbuchsen 6 ist auch der Einsatz von bekannten und für den Fachmann naheliegenden Lagern bzw. Lagerbuchsen möglich.

In einer nicht dargestellten Variante der erfindungsgemäßen Lösung kann vorgesehen sein, dass die Druckstücke 4a, 4b im wesentlichen aus Kunststoff, vorzugsweise aus einem Hochleistungskunststoff hergestellt sind. Hierfür eignet sich der hinsichtlich der Gleitlager 5 bereits beschriebene Hochleistungskunststoff. Vorteilhaft ist es dabei, wenn der Hochleistungskunststoff gleitmodifiziert ist, wie z.B. der Torlon 4301. Von Vorteil bei dieser Variante, in der die Druckstücke 4a, 4b im wesentlichen aus Kunststoff bestehen, ist, dass sowohl der beim bisherigen Stand der Technik notwendige O-Ring als auch die Gleitfolie zur Zahnstange 2 entfallen kann. Die notwendige Gleitfähigkeit wird durch das Druckstück 4a, 4b aufgrund der Ausbildung aus Kunststoff sichergestellt. Entfallen kann, im Vergleich zu dem Ausführungsbeispiel, auch die Gleitbuchse 6. Eine Ausbildung der Druckstücke 4a, 4b aus Kunststoff ermöglicht es; dass nur noch ein einziges Teil eingebaut werden muss.

Die erfindungsgemäße.Lösung eignet sich nicht nur für die im Ausführungsbeispiel dargestellte Zahnstangen-Elektrolenkungen. Vielmehr können alle bekannten Zahnstangen-Elektrolenkungen mit der erfindungsgemäßen Lösung versehen werden. Dabei kann in einer einfachen Ausgestaltung auch nur ein Gleitlager 5 bzw. allgemein ein Lager zur Führung der Zahnstange in dem Gehäuse eingesetzt werden.

### Bezugszeichen

- 1: Gehäuse
- la: Gehäuseteil (Druckstück 4a)
- 1b: Gehäuseteil (Druckstück 4b)
- 1c: zylinderförmiges-Gehäuseteil
- 2.: Zahnstange
- 3a: Ritzel
- 3b: Ritzel
- 4a: Druckstück
- 4b: Druckstück
- 5: Lager, Gleitlager (Zahnstange-Gehäuse)
- 6: Gleitlager, Gleitbuchse (Druckstück-Gehäuseteil)

## Patentansprüche

1. Zahnstangen-Elektrolenkung, insbesondere für Kraftfahrzeuge mit einer in einem Gehäuse (1) verlaufenden Zahnstange, die mit einer Druckstück/Ritzel-Paarung in Wirkverbindung steht, bei der zur Führung der Zahnstange (2) wenigstens ein Lager (5) zwischen der Zahnstange (2) und dem Gehäuse (1) vorgesehen ist, wobei das Lager als Gleitlager (5) ausgebildet ist,
**dadurch gekennzeichnet, dass**
das Gleitlager (5) über eine Schlossgeometrie schließbar ist, wobei das Gleitlager (5) in einem verzahnungsfreien Bereich auf der Zahnstange angeordnet und von der Zahnstange (2) mitbewegt ein Kontakt mit dem Ritzel (3) ausgeschlossen ist.

2. Zahnstangen-Elektrolenkung nach Anspruch 1,
**dadurch gekennzeichnet, dass**
zwei Gleitlager (5) zur Führung der Zahnstange (2) in dem Gehäuse (1) vorgesehen sind.

3. Zahnstangen-Elektrolenkung nach Anspruch 1 oder 2,
**dadurch gekennzeichnet, dass**
zwei Ritzel (3a bzw. 3b) mit jeweils einem zugeordneten Druckstück (4a, 4b) vorgesehen ist, wobei ein Ritzel (3a) mit der Servoseite und ein Ritzel (3b) mit der Sensorseite bzw. der Lenksäule in Verbindung steht.

4. Zahnstangen-Elektrolenkung nach einem der Ansprüche 1 bis 3,
**dadurch gekennzeichnet, dass**
das Gehäuse (1), insbesondere ein zylindrischer Gehäuseteil (1c), durchgehend gehont ist.

5. Zahnstangen-Elektrolenkung nach einem der Ansprüche 1 bis 4,
**dadurch gekennzeichnet, dass**
das Gleitlager (5) im wesentlichen aus Kunststoff, vorzugsweise einem für hohe Temperaturen geeigneten Hochleistungskunststoff, ausgebildet ist.

6. Zahnstangen-Elektrolenkung nach Anspruch 5,
**dadurch gekennzeichnet, dass**
das Gleitlager (5) spritzgusstechnisch hergestellt ist.

7. Zahnstangen-Elektrolenkung nach einem der Ansprüche 1 bis 6,
**dadurch gekennzeichnet, dass** zwischen dem Druckstück (4a bzw. 4b) und dem das Druckstück (4a bzw. 4b) umgebenden Gehäuseteil (1a bzw. 1b) ein den Kontaktbereich im wesentlichen abdeckendes Gleitlager bzw. eine Gleitbuchse (6) eingesetzt ist.

8. Zahnstangen-Elektrolenkung nach Anspruch 7,
**dadurch gekennzeichnet, dass**
das Gleitlager bzw. die Gleitbuchse (6) in das Gehäuseteil (1a bzw. 1b) eingesetzt ist.

9. Zahnstangen-Elektrolenkung nach Anspruch 7 oder 8,
**dadurch gekennzeichnet, dass**
das Gleitlager (6) im wesentlichen aus Kunststoff, vorzugsweise aus einem Hochleistungskunststoff ausgebildet ist.

10. Zahnstangen-Elektrolenkung nach Ansprüche 1 bis 9,
**dadurch gekennzeichnet, dass**
das Druckstück (4a bzw. 4b) im wesentlichen aus Kunststoff hergestellt ist.

11. Zahnstangen-Elektrolenkung nach Anspruch 10,
**dadurch gekennzeichnet, dass**
das Druckstück (4a bzw. 4b) aus einem gleitmodifizierten Hochleistungskunststoff, vorzugsweise spritzgusstechnisch, hergestellt ist.

## Claims

1. Electric rack-and-pinion steering system, in particular for motor vehicles, having a rack which extends in a housing (1) and is operatively connected to a pressure piece/pinion pair, in which at least one bearing (5) is provided between the rack (2) and the housing (1) in order to guide the rack (2), the bearing being configured as a sliding bearing (5), **characterized in that** the sliding bearing (5) can be closed via a closing geometry, contact with the pinion (3) being ruled out with the sliding bearing (5) being arranged on the rack in a toothless region and driven by the rack (2).

2. Electric rack-and-pinion steering system according to Claim 1, **characterized in that** two sliding bearings (5) are provided for guiding the rack (2) in the housing (1).

3. Electric rack-and-pinion steering system according to Claim 1 or 2, **characterized in that** two pinions (3a and 3b) are provided with in each case one associated pressure piece (4a, 4b), one pinion (3a) being connected to the servo side and one pinion (3b) being connected to the sensor side or the steering column.

4. Electric rack-and-pinion steering system according to one of Claims 1 to 3, **characterized in that** the housing (1), in particular a cylindrical housing part (1c), is honed throughout.

5. Electric rack-and-pinion steering system according to one of Claims 1 to 4, **characterized in that** the sliding bearing (5) is configured substantially from plastic, preferably a high-performance plastic which is suitable for high temperatures.

6. Electric rack-and-pinion steering system according to Claim 5, **characterized in that** the sliding bearing (5) is manufactured using injection-moulding technology.

7. Electric rack-and-pinion steering system according to one of Claims 1 to 6, **characterized in that** a sliding bearing which covers the contact region substantially or a sliding bush (6) is introduced between the pressure piece (4a or 4b) and the housing part (1a or 1b) which surrounds the pressure piece (4a or 4b).

8. Electric rack-and-pinion steering system according to Claim 7, **characterized in that** the sliding bearing or the sliding bush (6) is introduced into the housing part (1a or 1b).

9. Electric rack-and-pinion steering system according to claim 7 or 8, **characterized in that** the sliding bearing (6) is configured substantially from plastic, preferably from a high-performance plastic.

10. Electric rack-and-pinion steering system according to one of Claims 1 to 9, **characterized in that** the pressure piece (4a or 4b) is manufactured substantially from plastic.

11. Electric rack-and-pinion steering system according to Claim 10, **characterized in that** the pressure piece (4a or 4b) is manufactured, preferably using injection-moulding technology, from a friction-modified high-performance plastic.

## Revendications

1. Direction électrique à crémaillère, notamment pour véhicules automobiles comprenant une crémaillère qui s'étend dans un boîtier (1), laquelle se trouve en liaison active avec un couple élément de pression/pignon, avec laquelle au moins un palier (5) est prévu entre la crémaillère (2) et le boîtier (1) pour guider la crémaillère (2), le palier étant réalisé sous la forme d'un palier lisse (5), **caractérisée en ce que** le palier lisse (5) peut être fermé par le biais d'une géométrie en serrure, le palier lisse (5) étant disposé dans une zone sans denture sur la crémaillère et entraîné par la crémaillère (2), un contact avec le pignon (3) étant exclu.

2. Direction électrique à crémaillère selon la revendication 1, **caractérisée en ce que** deux paliers lisses (5) sont prévus pour guider la crémaillère (2) dans le boîtier (1).

3. Direction électrique à crémaillère selon la revendication 1 ou 2, **caractérisée en ce que** deux pignons (3a ou 3b) sont prévus, auxquels est respectivement associé un élément de pression (4a, 4b), un pignon (3a) étant en liaison avec le côté asservi et un pignon (3b) avec le côté détection ou la colonne de direction.

4. Direction électrique à crémaillère selon l'une des revendications 1 à 3, **caractérisée en ce que** le boîtier (1), notamment une partie cylindrique du boîtier (1c) est rodée de bout en bout.

5. Direction électrique à crémaillère selon l'une des revendications 1 à 4, **caractérisée en ce que** le palier lisse (5) est pour l'essentiel réalisé en matière plastique, de préférence dans une matière plastique à hautes performances conçue pour les températures élevées.

6. Direction électrique à crémaillère selon la revendication 5, **caractérisée en ce que** le palier lisse (5) est fabriqué par technique de moulage par injection.

7. Direction électrique à crémaillère selon l'une des revendications 1 à 6, **caractérisée en ce qu'**entre l'élément de pression (4a ou 4b) et la partie du boîtier (1a ou 1b) qui entoure l'élément de pression (4a ou 4b) est logé un palier lisse ou une douille de glissement (6) qui recouvre l'essentiel de la zone de contact.

8. Direction électrique à crémaillère selon la revendication 7, **caractérisée en ce que** le palier lisse ou la douille de glissement (6) est logé dans la partie de boîtier (1a ou 1b).

9. Direction électrique à crémaillère selon la revendication 7 ou 8, **caractérisée en ce que** le palier lisse (6) est pour l'essentiel réalisé en matière plastique, de préférence dans une matière plastique à hautes performances.

10. Direction électrique à crémaillère selon l'une des revendications 1 à 9, **caractérisée en ce que** l'élément de pression (4a ou 4b) est pour l'essentiel réalisé en matière plastique.

11. Direction électrique à crémaillère selon la revendication 10, **caractérisée en ce que** l'élément de pression (4a ou 4b) est réalisé dans une matière plastique à hautes performances modifiant le glissement, de préférence par technique de moulage par injection.
